(19) Europäisches Patentamt
European Patent Office
Office européen des brevets

(11) **EP 1 939 345 A1**

(12) **EUROPEAN PATENT APPLICATION**

(43) Date of publication:
**02.07.2008 Bulletin 2008/27**

(51) Int Cl.:
***D06F 37/20*** *(2006.01)*

(21) Application number: **07123441.3**

(22) Date of filing: **18.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **27.12.2006 US 646223**

(71) Applicant: **General Electric Company Schenectady, NY 12345 (US)**

(72) Inventors:
• **Holmes, John S.
  Sellersburg, IN 47172 (US)**

• **Filippa, Mariano Pablo
  Louisville, KY 40222 (US)**
• **McIntyre, Michael Lee
  Louisville, KY 40225 (US)**

(74) Representative: **Illingworth-Law, William Illingworth
GE International Inc.
London Patent Operation
15 John Adam Street
London WC2N 6LU (GB)**

(54) **Systems and methods for detecting out-of-balance conditions in electronically controlled motors**

(57)    A method (30) of determining an out-of-balance condition of an electronically controlled motor. The method includes: determining a plurality of parameters (34, 36, 42, 44) based on measurements taken from the electronically controlled motor, and calculating a composite (38, 46, 48) score by combining said plurality of parameters into a mathematical transfer function. The mathematical transfer function includes a non-zero weighting factor for each of the plurality of parameters.

FIG. 2

EP 1 939 345 A1

## Description

The present disclosure relates to electronically controlled motors and, more particularly, to methods and systems for detecting out-of-balance conditions in electronically controlled motors.

Various appliances such as washing machines, dryers, and the like, utilize a rotating drum driven by a shaft connected to an electronically controlled motor. The drum typically holds a load of material, which may be unevenly distributed within the drum. When the load is unevenly distributed or out of balance, the center of mass of the rotating drum does not correspond to the geometric axis of the drum. The out-of-balance load results in an out-of-balance condition in the electronically controlled motor. The out-of-balance load and condition can lead to excess noise and vibration, as well as high loads that can ultimately lead to premature failure of the washing machine and/or motor.

Machines controlled by electronically controlled motors perform poorly if the load is out of balance. Therefore, it is useful for the motor to be able to detect an out-of-balance condition and either act on it or report the condition to a master control device. Prior art methods and systems have typically used a single measurement, such as ripple current, torque ripple, average current over time, stored power levels for profiles, or the difference between target speed and actual speed, to make an out-of-balance determination.

Unfortunately, the prior art methods often employ additional hardware to detect the out-of-balance condition. Because electrically controlled motors are typically low cost devices, adding hardware to such devices is not an attractive option since this could increase the cost of the motor by 50% or more.

Accordingly, there is a continuing need for methods and systems for determining an out-of-balance condition in electronically controlled motors that overcome or mitigate the drawbacks of prior art methods and systems.

The invention provides systems and methods of detecting an out-of-balance condition in a device having an electronically controlled motor are provided that can easily be tuned based on the application and that do not require specialized hardware.

According to the invention, a system for determining an out-of-balance condition in an electronically controlled motor is provided. The system includes: a controller, a motor interfacing with the controller, and a scoring sequence resident on the controller. The scoring sequence receives a plurality of parameters from the motor and calculates a composite score by combining the plurality of parameters into a mathematical transfer function. The mathematical transfer function includes a non-zero weighting factor for each of the plurality of parameters, and the composite score provides a measure of an out-of-balance condition in the motor.

A method of determining an out-of-balance condition of an electronically controlled motor is also provided. The method includes: determining a plurality of parameters based on measurements taken from the electronically controlled motor, and calculating a composite score by combining said plurality of parameters into a mathematical transfer function. The mathematical transfer function includes a non-zero weighting factor for each of the plurality of parameters.

The above-described and other features and advantages of the present disclosure will be appreciated and understood by those skilled in the art from the following detailed description with reference to the accompanying drawings, in which:

FIG. 1 is illustrates a washing machine having an exemplary embodiment of a system for detecting an out-of-balance condition according to the present disclosure; and

FIG. 2 illustrates an exemplary embodiment of a method for determining an out-of-balance condition according to the present disclosure.

## DETAILED DESCRIPTION OF THE PREFERRED EMBODIMENT

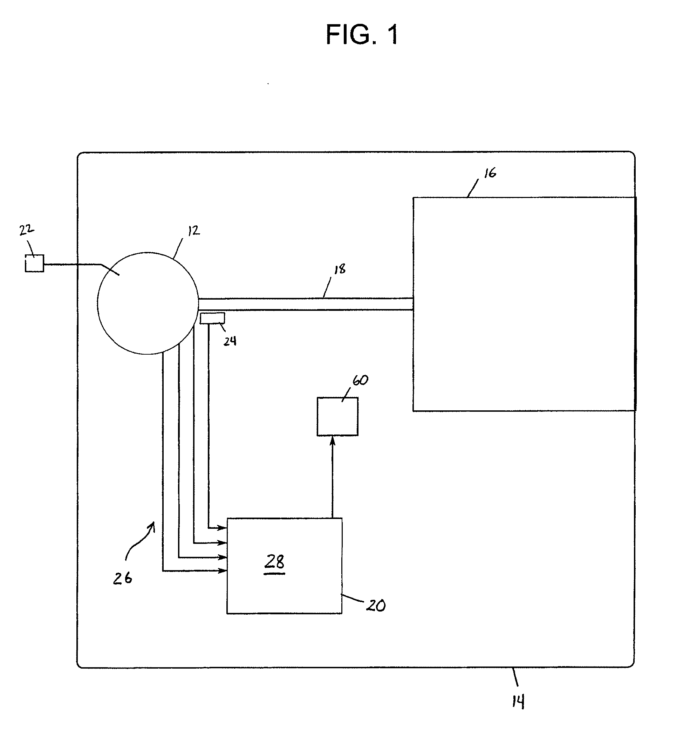

Referring now to the drawings and in particular to FIG. 1, a system 10 for detecting an out-of-balance condition of an electronically controlled motor 12 is shown. For purposes of clarity, system 10 is shown in use with a horizontal-axis or front loading washing machine 14. Advantageously, system 10 can determine the out-of-balance condition by calculating a composite score based on a plurality of parameters that are readily available within the motor. As such, system 10 can easily be implemented without requiring specialized hardware or sensors.

In the illustrated embodiment where system 10 is implemented in washing machine 14, motor 12 is connected to a rotating drum 16 by a rotating shaft 18. Motor 12 interfaces with a controller 20, which is configured to determine the out-of-balance condition.

Although horizontal-axis washing machine 14 has been chosen for purposes of explaining an exemplary embodiment of system 10, it should be understood that the system according to the present disclosure may also be used in a vertical axis washing machine, a tilted axis washing machine, a clothes dryer, and any other application where an electronically controlled motor is connected to a load that may become imbalanced.

Motor 12 is preferably a three-phase alternating current induction motor, but may be any electronically controlled motor known in the art. Motor 12 converts electrical energy from a power source 22 to kinetic energy for rotating shaft 18, which in turn rotates drum 16 of washing machine 14. System 10 includes a speed measuring device 24, which measures the rotational speed of shaft 18. In one preferred embodiment, speed measuring device 24 comprises one or more hall sensors.

Controller 20 interfaces with motor 12 and speed measuring device 24 to receive one or more signals 26. Controller 20 implements sequence 28 which is resident on controller 20 and which uses signals 26 to calculate an out-of-balance score for motor 12. Once the out-of-balance score has been calculated, controller 20 takes appropriate action based on the value of the score and the predetermined requirements of washing machine 14.

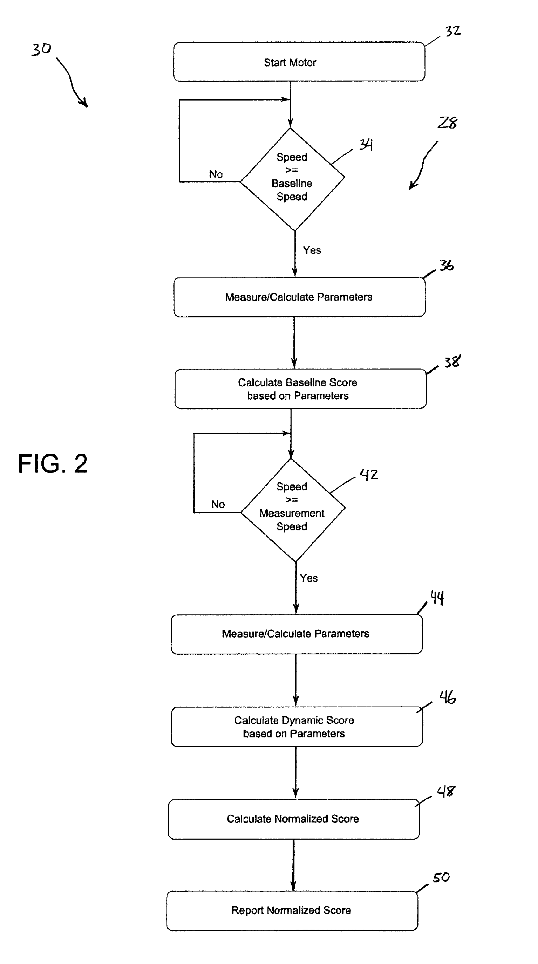

FIG. 2 describes in greater detail the operation of sequence 28 with reference to an exemplary embodiment of a method of detecting an out-of-balance condition according to the present disclosure.

Method 30 includes a motor starting step 32. Once the motor has been started, controller 20 initiates sequence 28. Sequence 28 includes a first speed checking step 34. At first speed checking step 34, method 30 determines whether the speed of rotating shaft 18, as measured by speed measuring device 24, and thus the speed of rotating drum 16 has reached a predetermined baseline speed. The baseline speed is a predetermined value stored by controller 20.

If controller 20 determines that the speed of rotating shaft 18 is less than the baseline speed, no measurement is taken. However, if controller 20 determines that the speed of rotating shaft 18 is greater than or equal to the baseline speed, method 30 measures and/or calculates one or more parameters based on signals 26, at a first measurement step 36.

In the embodiment where system 10 is in use in washing machine 14, the baseline speed is preferably below a critical speed known as the plaster speed, that is the speed at which a load of clothes in washer 14 will be plastered to the walls of drum 16 as a result of centrifugal force. When shaft 18 is rotating at less than the plaster speed, the clothes will fall and tumble around in drum 16 as the drum rotates. It has been determined by the present disclosure that measuring the parameters when the speed of shaft 18 is less than the plaster speed allows controller 20 to determine the approximate size of the load in drum 16.

After controller 20 determines the parameters, method 30 performs a baseline score calculation step 38, combining the parameters in a mathematical transfer function to produce a baseline score. Preferably, the parameters include bulk cap voltage ($V_{bulk}$), bulk current ($I_{bulk}$), motor phase current ($I_{motor}$), motor speed, motor acceleration, and motor slip. Each of the parameters can be either measured directly from the motor 12 or calculated from signals 26. For example, voltage, current, and speed are measured directly such that signals 26 are the parameters. However, controller 20 can calculate acceleration by determining change in speed per unit time. Controller 20 can calculate slip by determining the difference between the speed at which a magentic field of motor 12 is rotating (synchronous speed) and a rotational speed of shaft 18.

Method 30 determines the baseline score by combining the parameters into a mathematical transfer function. In one preferred embodiment, the mathematical transfer function is given by the following equation (equation 40):

$$\text{Score} = K1(V_{bulk}) + K2(I_{bulk}) + K3(I_{motor}) + K4(\text{speed}) + K5(\text{acceleration}) + K6(\text{slip})$$

Where coefficients K1 through K6 are non-zero weighting factors. The values for the coefficients will vary depending on the application in which motor 12 is being used. Advantageously, this allows the weighting factors to be empirically defined by a manufacturer, allowing the manufacturer to tune the sensitivity of the out-of-balance calculation based on a specific application. Advantageously, this eliminates the need to devise a new algorithm for each application. Further, method 30 can be implemented without the need to design a new sensor for each application.

Once controller 20 has calculated a baseline score by combining the parameters into the mathematical transfer function, method 30 performs a second speed checking step 42. At second speed checking step 42, method 30 determines if the speed of rotating shaft 18 is above the plaster speed. If the speed of rotating shaft 18 is less than the plaster speed, no measurement is taken. However, if the speed of rotating shaft 18 is greater than the plaster speed, method 30 performs a second measurement step 44 wherein the parameters are again measured and/or calculated. Method 30 then performs a dynamic score calculation step 46 using the same mathematical transfer function used in baseline score calculation step 38. The dynamic score gives an indication of whether the load on motor 12 is out of balance.

After the baseline score and the dynamic score have been calculated, method 30 performs a normalization step 48. Normalization step 48 uses the baseline score to normalize the dynamic score according to load size. In one preferred embodiment, normalization step 48 comprises determining a normalized score by dividing the dynamic score by the baseline score. Once the normalized score has been calculated, controller 20 reports the normalized score to a master control device 60 of washing machine 14 at reporting step 50. An appropriate response can then be executed by master control device 60.

Optionally, method 30 may perform second measurement step 44, and dynamic score calculation step 46, several times. Dynamic scores 44 will then be averaged before method 30 proceeds to normalization step 48. If the mathematical transfer function used to calculate the dynamic score is noise sensitive, a scoring method may be implemented instead of averaging the dynamic scores. For example, method 30 may take the best n scores out of m values measured.

Advantageously, method 30 allows for the detection of an out-of-balance condition using measurements that are readily available from motor 12. The mathematical transfer function used to detect the out-of-balance state can be tuned depending on the machine in which motor 12 is used. Because weighting factors K1 through K6 are programmed into controller 20, method 30 does not require additional sensors or other hardware. In addition, there is no need to devise a new algorithm for each application; the out-of-balance detection method can be employed in any application simply by tuning the weighting factors K1 through K6 of the mathematical transfer function. This allows method 30 to be employed in a wide variety of applications in a cost-effective manner.

It should be noted that the terms "first", "second", and the like may be used herein to modify various elements. These modifiers do not imply a spatial, sequential, or hierarchical order to the modified elements unless specifically stated.

**Claims**

1. A method (30) of determining an out-of-balance condition of an electronically controlled motor (12), the method comprising:

    determining a plurality of parameters (34, 36, 42, 44) based on measurements taken from the electronically controlled motor; and
    calculating a composite score by combining said plurality of parameters into a mathematical transfer function (40), said mathematical transfer function including a non-zero weighting factor for each of said plurality of parameters.

2. The method of claim 1, wherein said plurality of parameters comprises at least one parameter selected from the group consisting of: bulk voltage, bulk current, motor current, speed, acceleration, and slip.

3. The method of claim 1 or claim 2, wherein the step of calculating the composite score comprises calculating a baseline score (38), calculating a dynamic score (46), and calculating a normalized score (48) based on said dynamic score and said baseline score.

4. The method of claim 3, wherein said normalized score is calculated by dividing said dynamic score by said baseline score.

5. The method of claim 3, wherein said baseline score is calculated when a rotating speed of a shaft of the electronically controlled motor has reached a predetermined baseline speed.

6. The method of claim 3, wherein said dynamic score is calculated when a rotating speed of a shaft of the electronically controlled motor has reached a predetermined critical speed.

7. The method of claim 6, wherein said predetermined critical speed is equal to a plaster speed.

8. The method of claim 1, wherein the step of calculating said composite score comprises calculating a baseline score (38), calculating a plurality of dynamic scores (46), averaging said plurality of dynamic scores, and calculating a normalized score (48) based on an average of said plurality of dynamic scores and said baseline score.

9. The method of any one of claims 1 to 8, further comprising tuning said non-zero weighting factors based on predetermined requirements.

10. A method (30) of determining an out-of-balance condition of an electronically controlled motor (12), the method comprising:

    determining a plurality of parameters (34, 36, 42, 44) based on measurements taken from the electronically controlled motor; and
    calculating a composite score by combining said plurality of parameters into a mathematical transfer function (40), said mathematical transfer function including a non-zero weighting factor for each of said plurality of parameters,

wherein said parameters comprise: bulk voltage, bulk current, motor current, speed, acceleration, and slip.

# FIG. 1

FIG. 2

*30*

*28*

```
                        ┌──────────────────────────┐  32
                        │        Start Motor        │
                        └──────────────────────────┘
                                    │
                 ┌──────────────────┤
                 │                  ▼
                 │              ╱◇◇◇◇◇◇◇╲   34
                 │            ╱   Speed   ╲
              No │          ╱      >=       ╲
                 └─────────    Baseline      
                            ╲    Speed     ╱
                              ╲◇◇◇◇◇◇◇◇◇╱
                                    │ Yes
                                    ▼
                        ┌──────────────────────────┐  36
                        │  Measure/Calculate Parameters │
                        └──────────────────────────┘
                                    │
                                    ▼
                        ┌──────────────────────────┐  38
                        │   Calculate Baseline Score   │
                        │      based on Parameters     │
                        └──────────────────────────┘
                                    │
                 ┌──────────────────┤
                 │                  ▼
                 │              ╱◇◇◇◇◇◇◇╲   42
                 │            ╱   Speed   ╲
              No │          ╱      >=       ╲
                 └─────────   Measurement    
                            ╲    Speed     ╱
                              ╲◇◇◇◇◇◇◇◇◇╱
                                    │ Yes
                                    ▼
                        ┌──────────────────────────┐  44
                        │  Measure/Calculate Parameters │
                        └──────────────────────────┘
                                    │
                                    ▼
                        ┌──────────────────────────┐  46
                        │   Calculate Dynamic Score    │
                        │      based on Parameters     │
                        └──────────────────────────┘
                                    │
                                    ▼
                        ┌──────────────────────────┐  48
                        │   Calculate Normalized Score │
                        └──────────────────────────┘
                                    │
                                    ▼
                        ┌──────────────────────────┐  50
                        │   Report Normalized Score    │
                        └──────────────────────────┘
```

**EP 1 939 345 A1**

European Patent Office

**EUROPEAN SEARCH REPORT**

Application Number

EP 07 12 3441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/097099 A1 (EMERSON ELECTRIC CO.) 11 November 2004 (2004-11-11) * the whole document * ----- | 1,2,10 | INV. D06F37/20 |
| A | EP 1 167 611 A (WHIRLPOOL CO [US]) 2 January 2002 (2002-01-02) * the whole document * ----- | 1,10 | |

TECHNICAL FIELDS SEARCHED (IPC)

D06F

The present search report has been drawn up for all claims

| Place of search | Date of completion of the search | Examiner |
|---|---|---|
| Munich | 15 May 2008 | Stroppa, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

8

EP 1 939 345 A1

## ANNEX TO THE EUROPEAN SEARCH REPORT
## ON EUROPEAN PATENT APPLICATION NO.

EP 07 12 3441

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2008

| Patent document cited in search report | | Publication date | Patent family member(s) | | Publication date |
|---|---|---|---|---|---|
| WO 2004097099 | A1 | 11-11-2004 | EP | 1625250 A1 | 15-02-2006 |
| | | | US | 2005204482 A1 | 22-09-2005 |
| | | | US | 2004211009 A1 | 28-10-2004 |
| EP 1167611 | A | 02-01-2002 | BR | 0102585 A | 05-02-2002 |
| | | | CN | 1331410 A | 16-01-2002 |
| | | | DE | 60110684 D1 | 16-06-2005 |
| | | | DE | 60110684 T2 | 27-04-2006 |

or more details about this annex : see Official Journal of the European Patent Office, No. 12/82

9